# EUROPEAN PATENT SPECIFICATION

(11) **EP 4 646 634 B1**
(45) Date of publication and mention of the grant of the patent: **04.11.2026**
(21) Application number: 24704851.5
(22) Date of filing: 19.02.2024
(51) Int. Cl.: G05B 19/418

(54) **OPTIMIZING PARALLEL ASSEMBLY LINES USING KNOWLEDGE GRAPHS**
OPTIMIERUNG PARALLELER MONTAGELINIEN UNTER VERWENDUNG VON WISSENSGRAPHEN
OPTIMISATION DE LIGNES D'ASSEMBLAGE PARALLÈLES À L'AIDE DE GRAPHES DE CONNAISSANCES

(30) Priority: 27.02.2023 EP 23158792
(43) Date of publication of application: 12.11.2025
(73) Proprietor: Siemens Aktiengesellschaft, 80333 München (DE)
(72) Inventor: R, Kannan, Bangalore, Karnataka 560103 (IN); THIAGARAJAN, Sezhiyan, Bangalore, Karnataka 560102 (IN); WITTE, Martin, 91126 Schwabach (DE)
(74) Representative: Isarpatent
(86) International application number: PCT/EP2024/054112
(87) International publication number: WO 2024/179864

(56) References cited:
- WO-A1-2017/094471
- WO-A1-2022/252061
- US-A1- 2022 206 480

## Description

The present disclosure generally relates to assembly lines, and more particularly to optimizing parallel assembly lines using knowledge graphs.

Nowadays, the assembly line is widely used in industrial production for improving productivity and reducing cost of production. The assembly line is typically an arrangement of a plurality of machines working together to provide the final product. Over time, the assembly line has been upgraded from a traditional manual assembly line to an automatic and modularized station-type assembly line and, finally, to a mobile assembly line, in which each machine performs a standardized operation.

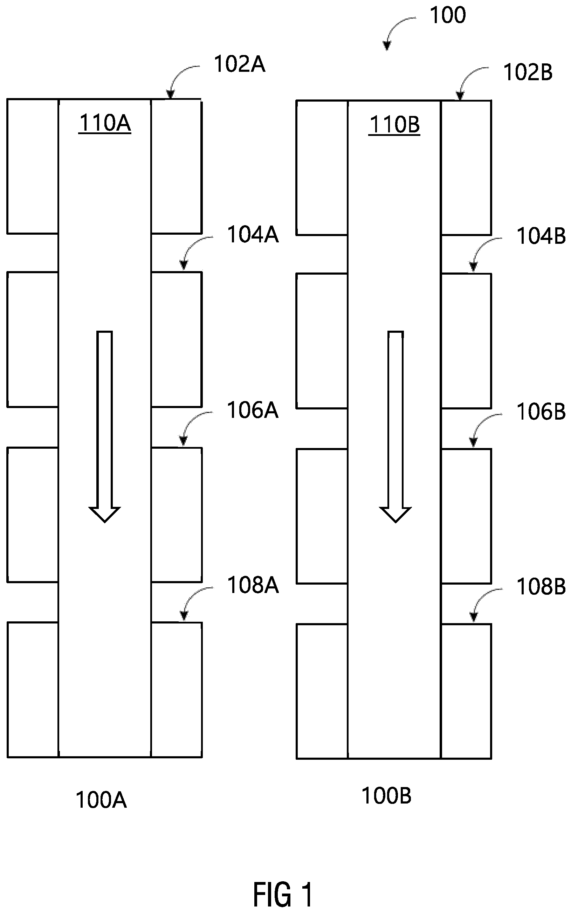

It is a common practice in industrial production to use similar assembly lines in parallel to increase production of same product type. The advantage of using the same assembly lines is that it enables reusing the system setup, automation, and operational staff and reducing the amount of time and resources required to build and maintain the system. FIG 1 illustrates an exemplary embodiment of parallel assembly lines 100 for battery preparation for a vehicle. As shown, each assembly line such as assembly line 100A and assembly line 100B includes a plurality of stations such as a feeding station 102A, 102B, a removal station 104A, 104B, a distribution station 106A, 106B, and an adhesive station 108A, 108B and a conveyor belt 110A, 110B for carrying the battery cells from one station to another. Further, an engineering application is used to define the hardware configuration, PLC programming, and other related functions for automation and commissioning of each battery preparation assembly line.

Initially, all the battery cells are fed into the feeding station 102A, 102B of the assembly lines 100A, 100B in a batch and are carried by the conveyor belt 110A, 110B to the removal station 104A, 104B for removing the battery cells from the batch according to the requirement for making a single battery for a vehicle. Further, the battery cells are carried to the distribution station 106A, 106B for their distribution and arrangement in parallel to make the connection for a high voltage. Thereafter, the parallel set of battery cells is carried to the adhesive station 108A, 108B for soldering to form a parallel connection. By utilizing the same plurality of stations, the assembly lines 100A, 100B are configured to ideally produce the same amount of batteries per hour. However, in some instances some deviations can be observed in the outcome. The deviation may be due to a number of factors, such as technical fault in one or more stations, process instability, or the different competence of the operators. In an exemplary embodiment, the deviation may be due to equipment failure, such as the failure of sensors and actuators in the assembly line. In another exemplary embodiment, the deviation may be due to the age of the equipment, which causes equipment failure. Therefore, a determination of the reason for the deviation is required to be performed. Further, optimization of the assembly line is also required to be performed, as optimization is directly related to the quality of the products and efficiency of the assembly line.

Conventionally, the equipment failures are determined manually using different engineering and diagnostic tools, and it takes a lot of time to determine the failures.

US 2022/206480 A1 relates to an AI-based smart asset health surveillance system and method designed to monitor and predict downtime or anomalous events in connected industrial systems, such as production or process lines.

WO 2017/094471 A1 relates to a management system and program designed for quality control of manufacturing facilities.

WO 2022/252061 A1 relates to a knowledge-based assembly process planning method, apparatus, and system that facilitates the efficient planning of assembly processes for customized manufacturing.

In light of the above limitations, there exists a need for a mechanism for systematically and automatically determining the reason for the deviation using the knowledge graph and optimizing the performance of the assembly line by resolving the determined reason.

The object of the present disclosure is achieved by a method for optimizing parallel assembly lines. The method comprises extracting a plurality of data and relations from an automation project related to each assembly line. The method further comprises converting the extracted plurality of data and relations into a knowledge graph for each assembly line. The method further comprises extracting data from a monitoring system related to each assembly line and applying transformation rules to convert the extracted data into a format in which the extracted data is directly usable. The method further comprises integrating the extracted data into the respective knowledge graph. Finally, the method comprises comparing the knowledge graph of an assembly line with the knowledge graph of parallel assembly lines using a machine learning algorithm and providing an output for optimizing the parallel assembly lines.

As used herein, plurality of data and relations are extracted from the automation project based on an engineering ontology using openness.

In an embodiment, the knowledge graph is a static graph which comprises a structure of the assembly line and the knowledge graph of each assembly line is stored in a database under a different name. The structure of the assembly line provides information such as but not limited to interconnection of assembly line components, availability of sensors and their interconnections, and programmable logic controller (PLC) control in the assembly line.

In an embodiment, the monitoring system is configured to monitor a plurality of devices present in the assembly line and provide a real-time data, including health and diagnostic information, periodically about the plurality of devices. The monitoring system includes one or more diagnostic tools such as PRONETA, one or more smart field devices such as an IO-link master and a data exchange standard protocol such as OPC-UA. The plurality of devices includes at least but not limited to sensors, actuators, valves, and binary input/output modules.

In an embodiment, the transformation rules are applied to the extracted data by extending ontology for one or more smart field devices.

In an embodiment, the knowledge graph of the assembly line is compared with the knowledge graph of the parallel assembly lines to determine one or more differences that result in deviation from expected output for the parallel assembly lines.

In an embodiment, the output depends on comparison outcome and is provided by an autonomous decision system, which is an application programming interface.

In an embodiment, the output includes one or more recommendations for optimizing the parallel assembly lines or an alarm or an alert message that discloses one or more process steps in the knowledge graph that cause deviation in expected output from the parallel assembly lines to an assembly line maintainer.

In an embodiment, the method further comprising utilizing one or more time series databases to store the data extracted from the monitoring system in case the extracted data is large in amount.

In an embodiment, the method further comprising implementing performance analytics for the assembly line by comparing real-time data extracted from the monitoring system with past periodic data for the same assembly line.

In another object of the present invention, a system for optimizing parallel assembly lines is provided. The system comprises one or more processing units. The system further comprises a memory unit coupled to the one or more processing units. The one or more processing units is configured to extract a plurality of data and relations from an automation project related to each assembly line and convert the extracted plurality of data and relations into a knowledge graph for each assembly line. The one or more processing units is further configured to extract data from a monitoring system related to each assembly line and apply transformation rules to convert the extracted data into a format in which the extracted data is directly usable and integrate the extracted data into the respective knowledge graph. Finally, the one or more processing units is configured to compare the knowledge graph of an assembly line with the knowledge graph of parallel assembly lines using a machine learning algorithm and provide an output for optimizing the parallel assembly lines by an autonomous decision system.

In still another object of the present invention, a computer-program product having machine-readable instructions stored therein, which when executed, cause the one or more processing units to perform the aforementioned method steps.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol and its several details can be modified in various obvious respects, all without departing from the scope of the present disclosure. The above-mentioned and other features of the present disclosure will now be addressed with reference to the accompanying drawings of the present invention. The illustrated embodiments are intended to illustrate, but not limit the invention. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:
- FIG 1: illustrates a diagrammatic front view of parallel assembly lines, in accordance with prior-art;
- FIG 2: illustrates a block diagram depicting the system for optimizing parallel assembly lines, in accordance with an embodiment of the present disclosure;
- FIG 3: illustrates a block diagram depicting interconnection of the system with a monitoring system for extracting data from the parallel assembly lines, in accordance with an embodiment of the present disclosure;
- FIG 4: illustrates a block diagram depicting components of the monitoring system utilized for monitoring the parallel assembly lines, in accordance with an embodiment of the present disclosure;
- FIG 5: is a flowchart of a method for optimizing parallel assembly lines, in accordance with an embodiment of the present disclosure; and
- FIG 6: illustrates a block diagram of the system in a network environment, in accordance with an embodiment of the present disclosure; and

Various embodiments are described with reference to the drawings, wherein like reference numerals are used to refer to like elements throughout. In the following description, for the purpose of explanation, numerous specific details are set forth in order to provide thorough understanding of one or more embodiments. It is apparent, however, to one skilled in the art that the embodiments of the present disclosure may be practiced without these specific details or with an equivalent arrangement. In other instances, well-known structures and devices are shown in block diagram form in order to avoid unnecessarily obscuring the embodiments of the present disclosure.

Before beginning a more detailed discussion of the various aspects of the illustrative embodiments, it should first be appreciated that throughout this description the term "mechanism" or "method" will be used to refer to aspects of the present disclosure that perform various operations, functions, and the like. A "mechanism," as the term is used herein, may be an implementation of the functions or aspects of the illustrative embodiments in the form of a system, a method, or a computer program product. In the case of a method, the method steps are implemented by one or more devices, apparatus, computers, data processing systems, or the like.

In the case of a computer program product, the logic represented by computer code or instructions embodied in or on the computer program product is executed by one or more hardware devices in order to implement the functionality or perform the operations associated with the specific "method." Thus, the methods described herein may be implemented as specialized hardware, software executing on general-purpose hardware, software instructions stored on a medium such that the instructions are readily executable by specialized or general purpose hardware, a procedure or method for executing the functions, or a combination of any of the above.

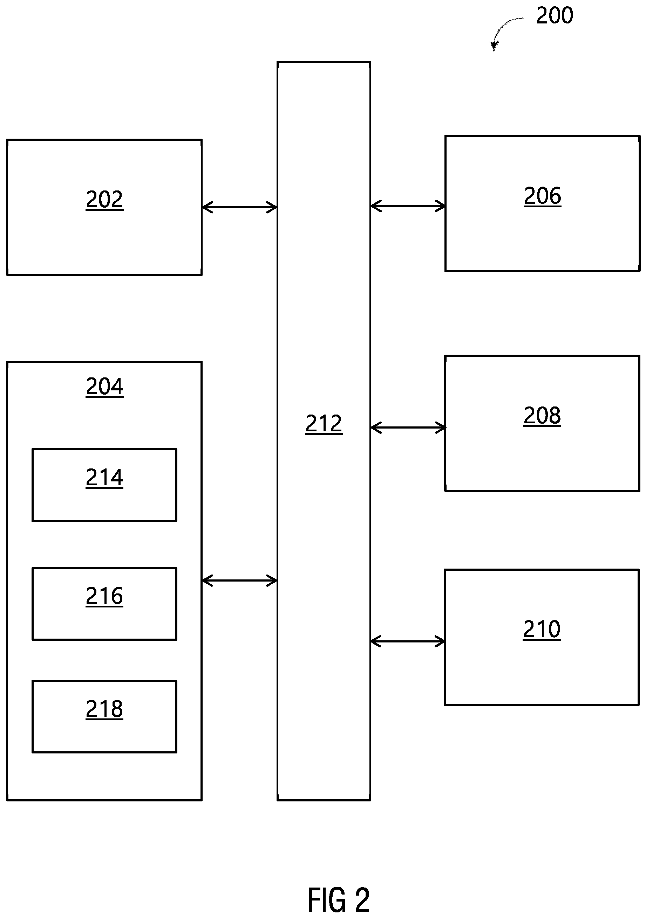

FIG 2 illustrates a block diagram of a system 200 for optimizing parallel assembly lines, in accordance with an embodiment of the present disclosure. The system 200 may be utilized in an industrial plant, having similar assembly lines for the production of similar products, for determining any deviation in the standard production of any one of the similar assembly lines and optimizing the assembly line. In another embodiment, the system 200 may be utilized for determining deviation in operation of any one of similar machines. In yet another embodiment, the system 200 may be utilized for determining deviation in operation of any one of similar work cells or similar production lines. The system 200 may be a computing system such as a personal computer, a laptop, a tablet, and any other computing system which is configured for processing data as per stored instructions. In one embodiment, the system 200 comprises one or more processing units 202, a memory unit 204, an input unit 206, an output unit 208, a database 210, and a system bus 212.

The one or more processing units 202, as used herein is a type of computational circuit such as but not limited to a microprocessor, microcontroller, graphics processor, digital signal processor, embedded controller, application specific integrated circuits, single chip computers or any other type of data processing circuit.

The one or more processing units 202 are configured to receive instructions from the memory unit 204 and further configured to execute the received instructions to implement mechanism of the present invention.

The memory unit 204 may be a volatile memory such as Random Access Memory (RAM), cache memory, etc. and a non-volatile memory such as Read-Only Memory (ROM), flash Memory, etc. or any combination thereof for storing data and/or machine-readable instructions. The memory unit 204 is configured to store application repository 214 capable of storing an engineering framework for implementing automation solutions. In an exemplary embodiment, the engineering framework is a totally integrated automation portal (TIA Portal) which is used to perform designing, commissioning, operating, and maintaining to upgrading automation systems and saving users' time, cost, and effort. The engineering framework is configured to create automation project for the assembly line. Each assembly line has its own engineering framework and hence an automation project.

The memory unit 204 is further configured to store the instructions in the machine-readable form which when executed by the one or more processing units 202 caused the one or more processing units 202 to extract a plurality of data and relations from the automation project related to each assembly line. In an embodiment, the plurality of data and relations are extracted from the automation project based on an engineering ontology using an openness. In another embodiment, the plurality of data and relations are extracted from the automation project using text or any other means. The engineering ontology generally describes main concept of automations such as organization Blocks (OBs), functions (FCs), function blocks (FBs), Data Blocks (DBs) and cross-references.

The memory unit 204 is further configured to store the instructions in the machine-readable form which when executed by the one or more processing units 202 caused the one or more processing units 202 to convert the extracted plurality of data and relations into a knowledge graph for each assembly line. The knowledge graph is a static graph which comprises a structure of the assembly line and gets stored in the database 210 under a different name. The knowledge graph is usually defined as a data structure which uses an ontological schema to illustrate structure of the assembly line including plurality of machines and their interactions by means of a directed and edge labeled graph. In one embodiment, the knowledge graph may be created from the plurality of data and relations by defining the ontology and data schema and then adding the entities extracted from the plurality of data and relations to existing structured knowledge base. In another embodiment, the knowledge graph may be created by choosing entities with the highest confidence degrees from the extracted plurality of data and relations and adding them to the knowledge base.

Generally, the process of constructing a knowledge graph can be performed into two steps including constructing body layer of the knowledge graph and learning the entity layer. The body layer construction typically includes extracting terms, synonyms, concepts, and extracting classifying relationships, and learning axioms and rules. The entity layer learning includes learning entities, filling in entity data, aligning entities, and linking entities. In an exemplary embodiment, the knowledge graphs for the assembly lines 100A, 100B are created by performing steps for each of the assembly line, the steps include organizing the extracted data of the assembly line into the knowledge graph's structure which typically requires an engineering ontology schema, loading the extracted data into the knowledge graph and linking entities to create the graph. The knowledge graph are then stored in two different name graphs in dotNetRDF graph. Advantageously, the knowledge graph enhances data interoperability and reusability and also facilitates data integration.

In one embodiment, the knowledge graphs stored in the database 210 can be extracted, by executing SPARQL queries, to get the structure of the assembly line. In another embodiment, the knowledge graphs can be extracted from the database by executing queries other than SPARQL queries such as but not limited to Cypher, Structured Query Language(SQL), and API call. The structure of the assembly line includes information such as but not limited to interconnection of assembly line components, availability of plurality of devices such as sensors, actuators, etc. and their interconnections, and also programmable logic controller (PLC) control in the assembly line.

The memory unit 204 is further configured to store the instructions in the machine-readable form which when executed by the one or more processing units 202 caused the one or more processing units 202 to extract data from a monitoring system.

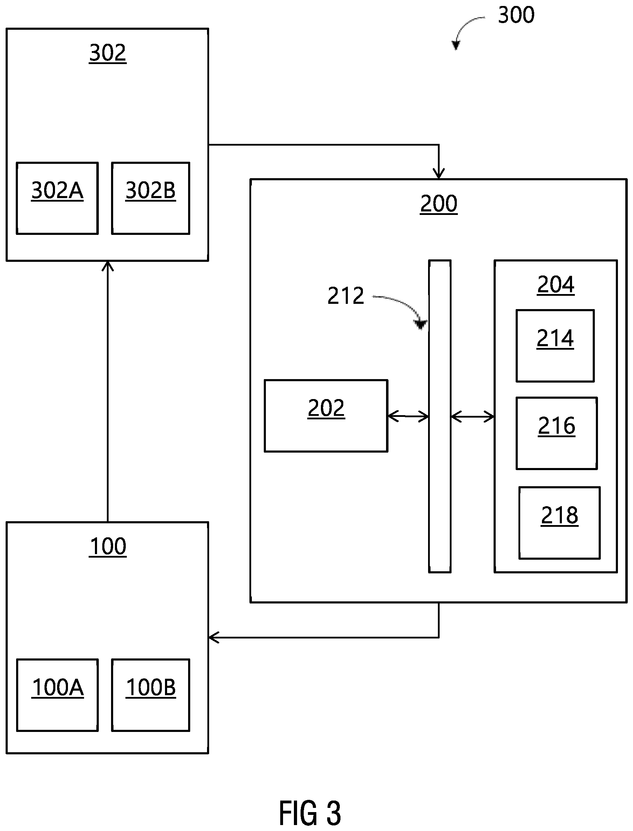

FIG 3 depicts interconnection 300 of the system 200 with the monitoring system 302 for extracting data from the parallel assembly lines 100, in accordance with an embodiment of the present disclosure. As depicted, the system 200 is configured to extract data from the monitoring system 302 using one or more processing units 202 on receiving instructions from the memory unit 204. It should be noted that the assembly line 100A is monitored by the monitoring system 302A, and the assembly line 100B is monitored by the monitoring system 302B. Each monitoring system is configured to monitor a plurality of devices present in the respective assembly line and provide a real-time data, including health and diagnostic information, periodically about the plurality of devices.

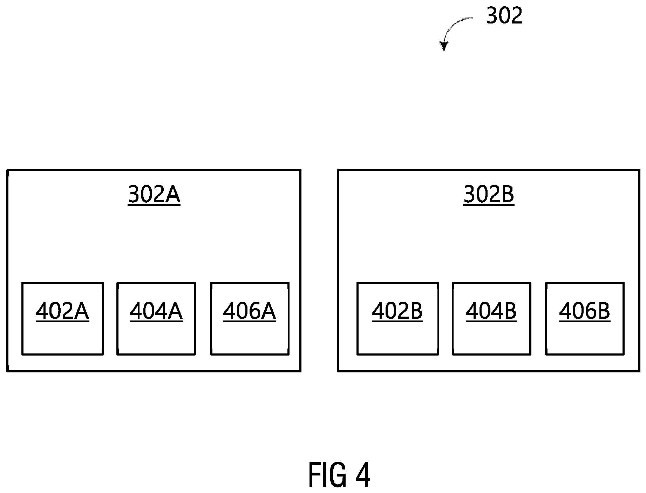

FIG **4****,** illustrates a block diagram depicting components of the monitoring system utilized for monitoring the parallel assembly lines, in accordance with an embodiment of the present disclosure. The monitoring system 302A comprises one or more diagnostic tools 402A, one or more smart field devices 404A, and a data exchange standard protocol 406A. Similarly, the monitoring system 302B comprises the one or more diagnostic tools 402B, one or more smart field devices 404B, and the data exchange standard protocol 406B.

The one or more diagnostic tools 402A, 402B generally provides a consistent way of commissioning and checking the plurality of devices distributed in the respective assembly lines 100A, 100B. The diagnostic tool may be software or a hardware device utilized for monitoring the plurality of devices. The software diagnostic tool is a computer program that is used, either inside or outside the system, to determine malfunctioning of the devices. In an exemplary embodiment, the diagnostic tool may be PRONETA software that can be utilized in a PROFINET network to control and monitor the plurality of low-level devices. Advantageously, the diagnostic tool scans the network and all devices to ensure proper connections. In additional embodiment, the diagnostic tool may also be used to display diagnostic messages generated by the system 200. For example, the diagnostic messages may be displayed to the user at runtime.

The one or more smart field devices 404A, 404B are involved in providing connection between respective IO-Link devices and higher-level controller. In one embodiment, the higher level controller is a programmable logic controller (PLC) that directs and controls the assembly line. The PLC may be configured for automating the industrial processes. For example, the PLC is configured to control the assembly line by automatically coordinating the operation of the machines. In an exemplary embodiment, the smart field device may be an IO-Link master that provides an interface to the higher-level controller and acts as gateway for the connection with the IO-Link devices. The IO-Link devices may be intelligent sensors, actuators, hub, valves, binary input/output unit, a mechatronic component, or a power supply unit with IO-Link connection. Further, the IO-Link master is a short distance, bi-directional, a single-drop digital communication interface technology that enables the transfer of parameters to the IO-Link devices and the delivery of identification and diagnostic information from the IO-Link devices to the higher-level controller. Advantageously, the IO-Link master enables automation system engineer to quickly and easily configure and control the IO-Link devices, thus allowing for faster and more efficient production.

In additional embodiment, IO-link description files or EPLAN information are also mapped into the knowledge graph. The IO-Link description files are used to describe configuration of IO-Link devices, such as the device type, its identity, and its function blocks. This allows the IO-Link device to be quickly and easily integrated into a larger automation system. The EPLAN information is typically used to provide detailed schematics on wiring the IO-Link devices, as well as other additional information of the IO-Link devices that might be necessary.

The data exchange standard protocol 406A, 406B is a standard protocol used for exchanging data from sensors to cloud applications. In an exemplary embodiment, the data exchange standard protocol may be an open platform communications united architecture (OPC-UA) for providing the secure communication from the one or more smart field devices to other systems such as cloud applications, human machine interfaces (HMIs), and industrial controllers. The OPC-UA is a data exchange standard for industrial communication such as machine-to-machine or PC-to-machine communication. In addition, the OPC-UA is independent of the manufacturer or system supplier of the application, of the programming language in which the respective software is programmed, and of the operating system on which the application is running. Advantageously, the OPC-UA offers advanced security features, such as encryption and authentication, to protect data from unauthorized access. Additionally, it is designed to be highly scalable, allowing for increased data throughput and more efficient communication.

The memory unit 204 is further configured to store the transformation rules 216, which is a set of instruction that may be utilized by the one or more processing units 202 for converting the extracted data into a format in which the extracted data is directly usable. In one embodiment, the transformation rules are applied to the extracted data by extending ontology for the one or more smart field devices 404A, 404B.

In another embodiment, if the extracted data from the monitoring system is large, one or more time series databases may be used to store it. In yet another embodiment, a general station description (GSD) file is used, in case detailed diagnostic error explanations are required for the assembly line components from different vendors. The GSD contains information about the critical information needed to configure the components, associated units, parameters, alarms, diagnostics, and vendor information.

The memory unit 204 is further configured to store the instructions in the machine-readable form which when executed by the one or more processing units 202 caused the one or more processing units 202 to integrate the data extracted from the monitoring system 302 into the respective knowledge graph. In additional embodiment, the one or more processing units 202 integrate the GSD file into the respective knowledge graph.

The memory unit 204 is further configured to store an autonomous decision system 218, which is an application programming interface (API), when executed by the one or more processing units 202 caused the one or more processing units 202 to compare the knowledge graph of an assembly line with the knowledge graph of parallel assembly lines. In other words, the one or more processing units 202 determine the difference in run-time data received from each assembly line and provide output for optimizing the parallel assembly lines. In one embodiment, the machine learning algorithm may be used to compare the knowledge graphs by extracting features from the graphs and then determining similarities and differences between the graphs and providing the output for optimizing the parallel assembly lines. For example, a clustering algorithm may be used to group similar graphs together, or a classification algorithm to identify and predict the types of relationships between entities in the graph. The output may include one or more recommendations such as steps to perform for optimizing the parallel assembly lines or an alarm or an alert message disclosing one or more process steps in the knowledge graph that cause deviation in expected output from the parallel assembly lines to the user or an assembly line maintainer. In an additional embodiment, the stored API can be executed by any other system or robots to determine the difference in the knowledge graphs of the assembly lines and provide recommendations.

The input unit 206 may include input means such as but not limited to keypad, touchpad, camera, and microphone, to enable the user to input at least a command, data, etc. in the system 200. The output unit 208 includes a mean such as a graphical user interface, monitor, display etc. for displaying output received from the one or more processing units 202 on executing the instructions or application repository stored in the memory unit 204. The database 210 may be a non-transitory storage medium which stores the knowledge graph generated on executing the instructions stored in the memory unit 204 by the one or more processing units 202.

The system bus 212 may include a bus memory or bus memory controller, a peripheral bus, and a local bus capable of interacting with any other bus architecture. The system bus 212 is further capable of allowing interconnection among the one or more processing units 202, the memory unit 204, the input unit 206, the output unit 208, and the database 210. Those of ordinary skill in the art will appreciate that the system 200 illustrated in FIG 2 is provided for the purpose of explanation only and is not meant to imply architectural limitations with respect to the present disclosure.

For example, other peripheral devices such as Local Area Network (LAN)/ Wide Area Network (WAN)/ Wireless (e.g., Wi-Fi) adapter, graphics adapter, an optical disk drive, disk controller, input/output (I/O) adapter may also be used in addition to the components depicted in the figure.

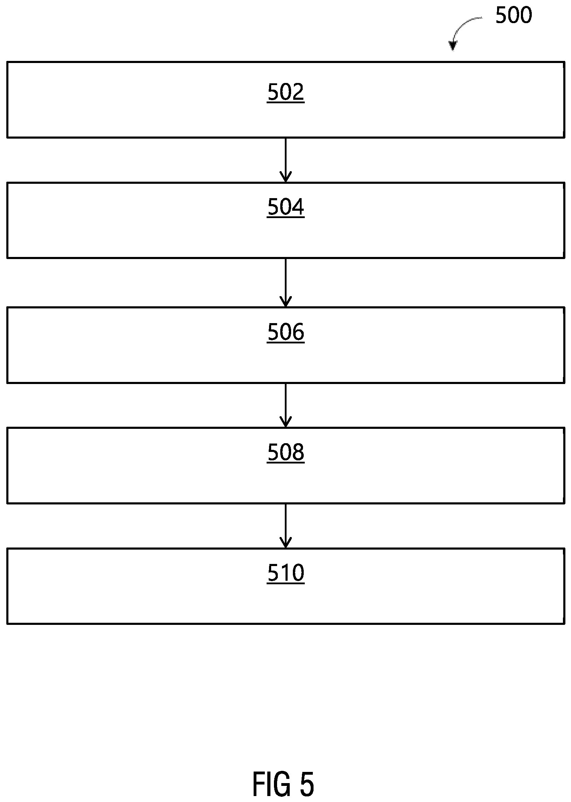

FIG 5 is a flowchart of a method 500 for optimizing parallel assembly lines, in accordance with an embodiment of the present disclosure. As will be discussed in greater detail hereafter, the illustrative embodiments are integrated to optimize the parallel assembly lines.

Accordingly, the method 500 begins at step 502 with the extraction of the plurality of data and relations from the automation project related to each assembly line. Successively, the extracted plurality of data and relations is converted into a knowledge graph, at step 504, for each assembly line. Each assembly line has its own static graph, which provides the interconnection of assembly line components, the availability of sensors and their interconnections, and programmable logic controller (PLC) control in the assembly line. The knowledge graph of each assembly line stored in the database can be differentiated by the name.

Successively, data is extracted from the monitoring system related to each assembly line, and transformation rules are applied to convert the extracted data into a format in which the extracted data is directly usable, at step 506. It should be noted that the data extracted from the monitoring system is real-time and includes health and diagnostic information about the plurality of devices. This data is not in a format that can be used directly, and hence transformation rules are required to bring the data into the desired format.

Successively, the extracted data is integrated into the respective knowledge graph, at step 508. After, successful integration, the knowledge graph of the assembly line is compared with the knowledge graph of the parallel assembly lines using a machine learning algorithm, and the output is provided, at step 510, for optimizing the parallel assembly lines. In one embodiment, the machine learning algorithm may be used to compare the knowledge graphs by extracting features from the graphs and then applying machine learning algorithm to those extracted features to determine similarities and differences between the graphs and providing the output for optimizing the parallel assembly lines. Advantageously, the method 500 not only saves the time or labor for determining the reason of deviation in the outcome of a parallel assembly line or a parallel machine or a parallel production line, but also enhances quality of the products and efficiency of the assembly line or the machine or the parallel production line.

In another embodiment, the method 500 may be utilized for implementing performance analytics of the assembly line by comparing real-time data extracted from the monitoring system with past periodic data for the same assembly line.

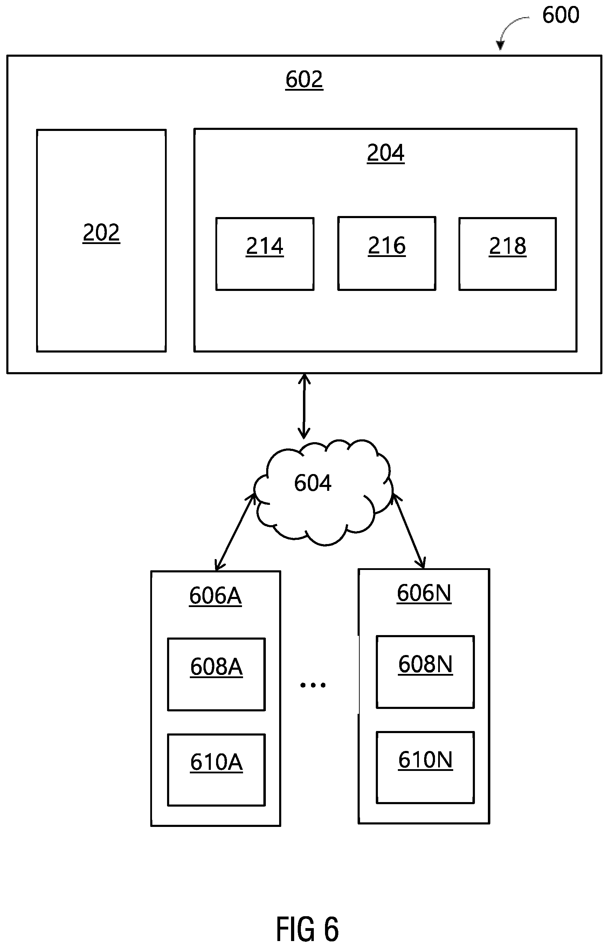

Referring now to FIG 6, a block diagram of the system in a network environment is illustrated, in accordance with an embodiment of the present disclosure. As illustrated, the system 600 includes a server 602 and a plurality of client devices 606A-N. Each of the client devices 606A-N is connected to the server 602 via a communication network 604 such as a Local Area Network (LAN), a Wide Area Network (WAN), Wi-Fi, etc. The server 602 is configured to include the one or more processing units 202 and the memory unit 204, wherein the application repository 214, transformation rules 216, and the autonomous decision system 218 reside in the memory unit 204 of the server 602 and is accessed by the client devices 606A-N via the network 604.

The application repository 214, transformation rules 216, the autonomous decision system 218, and other instructions in the machine-readable form when executed by the one or more processing units 202, causes the one or more processing units 202 to perform the invention as described in greater detail in FIGs 2 to 5. In an additional embodiment, the server 602 may include a network interface for communicating with the client devices 606A-N via the network 604. Each of the client devices 606A-N is provided with the input units 608A-N and the output units 610A-N. Users of the client devices 606A-N can access the server 602 via the input units 608A-N. In an exemplary operation, the user of the client device 606A may receive the output including the one or more recommendations or the alarm or the alert message on the output units 610A.

## Claims

1. A computer implemented method (500) for monitoring parallel assembly lines (100), the method comprising:
- extracting (S502) a plurality of data and relations from an automation project related to each assembly line;
- converting (S504) the extracted plurality of data and relations into a knowledge graph for each assembly line;
- extracting (S506) real time data from a monitoring system related to each assembly line and applying transformation rules to convert the extracted data into a format in which the extracted data is directly usable, wherein the monitoring system (302) is configured to monitor a plurality of devices present in the assembly line (100) and provide a real-time data, including health and diagnostic information, periodically about the plurality of devices;
- integrating (S508) the extracted data from the monitoring system into the respective knowledge graph; and
- comparing (S510) the knowledge graph of an assembly line with the knowledge graph of parallel assembly lines using a machine learning algorithm, wherein the knowledge graph of the assembly line is compared with the knowledge graph of the parallel assembly lines by extracting features from the knowledge graphs and the applying machine learning algorithm to the extracted features to determine one or more differences that result in deviation from expected output for the parallel assembly lines, and
- providing an output, wherein the output includes one or more recommendations for optimizing the parallel assembly lines or an alarm or an alert message that discloses one or more process steps in the knowledge graph that cause the deviation in expected output from the parallel assembly lines to an assembly line maintainer.

2. The method according to claim 1, wherein the plurality of data and relations are extracted from the automation project based on an engineering ontology using an openness.

3. The method according to claim 1, wherein the knowledge graph are static graphs which comprise a structure of the assembly line and the knowledge graphs are stored in a database under different names.

4. The method according to claim 3, wherein the structure of the assembly line in the knowledge graph provides information such as but not limited to interconnection of assembly line components, availability of sensors and their interconnections, and programmable logic controller, PLC, control in the assembly line.

5. The method according to any one of claim 1 to 4, wherein the monitoring system (302) includes one or more diagnostic tools such as PRONETA, one or more smart field devices such as an IO-link master and a data exchange standard protocol such as OPC-UA.

6. The method according to any one of claim 1 to 5, wherein the plurality of devices includes at least but not limited to sensors, actuators, valves, and binary input/output modules.

7. The method according to any one of claim 1 to 6, wherein the transformation rules (216) are applied to the extracted data by extending ontology for one or more smart field devices.

8. The method according to any one of claim 1 to 7, wherein the output depends on comparison outcome and is provided by an autonomous decision system (218), which is an application programming interface.

9. The method according to any one of claim 1 to 8, further comprising utilizing one or more time series databases to store the data extracted from the monitoring system in case the extracted data is large in amount.

10. The method according to any one of claim 1 to 9, further comprising implementing performance analytics for the assembly line by comparing real-time data extracted from the monitoring system with past periodic data for the same assembly line.

11. A computer system (200) for monitoring parallel assembly lines, the system (200) comprising:
- one or more processing units (202);
- a memory unit (204) coupled to the one or more processing units (202), wherein the memory unit (204) comprises instructions which when executed by the one or more processor, configured the one or more processing units (202) to perform the steps of the method of any one of claim 1 to 10.

12. A computer-program product, having machine-readable instructions stored therein, when executed by one or more processing units (202), cause the one or more processing units (202) to perform method steps according to any of the claims 1-10.

## Patentansprüche

1. Computerimplementiertes Verfahren (500) zum Überwachen paralleler Montagelinien (100), wobei das Verfahren Folgendes umfasst:
- Extrahieren (S502) einer Vielzahl von Daten und Beziehungen aus einem auf jede Montagelinie bezogenen Automatisierungsprojekt;
- Umwandeln (S504) der extrahierten Vielzahl von Daten und Beziehungen in einen Wissensgraphen für jede Montagelinie;
- Extrahieren (S506) von Echtzeitdaten aus einem auf jede Montagelinie bezogenen Überwachungssystem und Anwenden von Transformationsregeln, um die extrahierten Daten in ein Format umzuwandeln, in dem die extrahierten Daten direkt verwendbar sind, wobei das Überwachungssystem (302) dazu ausgelegt ist, eine Vielzahl von in der Montagelinie (100) vorhandenen Vorrichtungen zu überwachen und Echtzeitdaten, einschließlich Zustands- und Diagnoseinformationen, periodisch über die Vielzahl von Vorrichtungen bereitzustellen;
- Integrieren (S508) der extrahierten Daten aus dem Überwachungssystem in den jeweiligen Wissensgraphen; und
- Vergleichen (S510) des Wissensgraphen einer Montagelinie mit dem Wissensgraphen paralleler Montagelinien unter Verwendung eines Maschinenlernalgorithmus, wobei der Wissensgraph der Montagelinie mit dem Wissensgraphen der parallelen Montagelinien durch Extrahieren von Merkmalen aus den Wissensgraphen und das Anwenden des Maschinenlernalgorithmus auf die extrahierten Merkmale verglichen wird, um einen oder mehrere Unterschiede zu bestimmen, die zu einer Abweichung von der erwarteten Ausgabe für die parallelen Montagelinien führen, und
- Bereitstellen einer Ausgabe, wobei die Ausgabe eine oder mehrere Empfehlungen zum Optimieren der parallelen Montagelinien oder einen Alarm oder eine Warnmeldung beinhaltet, der/die einem Montagelinieninstandhalter einen oder mehrere Prozessschritte in dem Wissensgraphen offenbart, die die Abweichung der erwarteten Ausgabe von den parallelen Montagelinien bewirken.

2. Verfahren nach Anspruch 1, wobei die Vielzahl von Daten und Beziehungen aus dem Automatisierungsprojekt basierend auf einer Engineering-Ontologie unter Verwendung einer Openness extrahiert wird.

3. Verfahren nach Anspruch 1, wobei es sich bei dem Wissensgraphen um statische Graphen, die eine Struktur der Montagelinie umfassen, handelt und die Wissensgraphen in einer Datenbank unter verschiedenen Namen gespeichert sind.

4. Verfahren nach Anspruch 3, wobei die Struktur der Montagelinie in dem Wissensgraphen Informationen wie unter anderem eine Verschaltung von Montagelinienkomponenten, eine Verfügbarkeit von Sensoren und deren Verschaltungen und eine Steuerung durch eine speicherprogrammierbare Steuerung, SPS, in der Montagelinie bereitstellt.

5. Verfahren nach einem der Ansprüche 1 bis 4, wobei das Überwachungssystem (302) ein oder mehrere Diagnosewerkzeuge wie PRONETA, ein oder mehrere intelligente Feldgeräte wie einen IO-Link Master und ein Datenaustauschstandardprotokoll wie OPC-UA aufweist.

6. Verfahren nach einem der Ansprüche 1 bis 5, wobei die Vielzahl von Vorrichtungen mindestens unter anderem Sensoren, Aktoren, Ventile und binäre Ein-/Ausgabemodule beinhaltet.

7. Verfahren nach einem der Ansprüche 1 bis 6, wobei die Transformationsregeln (216) auf die extrahierten Daten angewendet werden, indem eine Ontologie für ein oder mehrere intelligente Feldgeräte erweitert wird.

8. Verfahren nach einem der Ansprüche 1 bis 7, wobei die Ausgabe von einem Vergleichsergebnis abhängt und durch ein autonomes Entscheidungssystem (218), bei dem es sich um eine Anwendungsprogrammierschnittstelle handelt, bereitgestellt wird.

9. Verfahren nach einem der Ansprüche 1 bis 8, das ferner Nutzen einer oder mehrerer Zeitreihendatenbanken zum Speichern der aus dem Überwachungssystem extrahierten Daten, falls die extrahierte Datenmenge groß ist, umfasst.

10. Verfahren nach einem der Ansprüche 1 bis 9, das ferner Implementieren von Leistungsanalysen für die Montagelinie durch Vergleichen von aus dem Überwachungssystem extrahierten Echtzeitdaten mit vergangenen periodischen Daten für dieselbe Montagelinie umfasst.

11. Computersystem (200) zum Überwachen paralleler Montagelinien, wobei das System (200) Folgendes umfasst:
- eine oder mehrere Verarbeitungseinheiten (202);
- eine mit der einen oder den mehreren Verarbeitungseinheiten (202) gekoppelte Speichereinheit (204), wobei die Speichereinheit (204) Anweisungen umfasst, die, wenn sie von dem einen oder den mehreren Prozessoren ausgeführt werden, die eine oder die mehreren Verarbeitungseinheiten (202) dazu konfigurieren, die Schritte des Verfahrens nach einem der Ansprüche 1 bis 10 durchzuführen.

12. Computerprogrammprodukt mit darin gespeicherten maschinenlesbaren Anweisungen, die, wenn sie von einer oder mehreren Verarbeitungseinheiten (202) ausgeführt werden, bewirken, dass die eine oder die mehreren Verarbeitungseinheiten (202) Verfahrensschritte nach einem der Ansprüche 1-10 durchführen.

## Revendications

1. Procédé (500), mis en œuvre par ordinateur, de surveillance de lignes d'assemblage parallèles (100), le procédé comprenant les étapes suivantes :
- extraire (S502) une pluralité de données et de relations d'un projet d'automatisme lié à chaque ligne d'assemblage ;
- convertir (S504) la pluralité de données et de relations extraites en un graphe de connaissances pour chaque ligne d'assemblage ;
- extraire (S506) des données temps réel d'un système de surveillance lié à chaque ligne d'assemblage et appliquer des règles de transformation pour convertir les données extraites dans un format où les données extraites sont directement exploitables, où le système de surveillance (302) est configuré pour surveiller une pluralité de dispositifs présents dans la ligne d'assemblage (100) et fournir des données temps réel, y compris des informations de santé et de diagnostic, périodiquement, concernant la pluralité de dispositifs ;
- intégrer (S508) les données extraites du système de surveillance dans le graphe de connaissances respectif ; et
- comparer (S510) le graphe de connaissance d'une ligne d'assemblage au graphe de connaissance de lignes d'assemblage parallèles en utilisant un algorithme d'apprentissage automatique, où le graphe de connaissance de la ligne d'assemblage est comparé au graphe de connaissance des lignes d'assemblage parallèles en extrayant des caractéristiques des graphes de connaissance et l'algorithme d'apprentissage machine et appliqué aux caractéristiques extraites pour déterminer une ou plusieurs différences qui conduisent à un écart par rapport à la sortie attendue pour les lignes d'assemblage parallèles, et
- fournir une sortie, la sortie comportant une ou plusieurs recommandations visant à optimiser les lignes d'assemblage parallèles ou une alarme ou un message d'alerte qui indique à un responsable de la maintenance de la ligne d'assemblage une ou plusieurs étapes de processus dans le graphe de connaissance qui sont à l'origine de l'écart de la sortie attendue des lignes d'assemblage parallèles.

2. Procédé selon la revendication 1, dans lequel la pluralité de données et de relations sont extraites du projet d'automatisation sur la base d'une ontologie d'ingénierie utilisant une ouverture.

3. Procédé selon la revendication 1, dans lequel les graphes de connaissance sont des graphes statiques qui comprennent une structure de la ligne d'assemblage et les graphes de connaissance sont stockés dans une base de données sous des noms différents.

4. Procédé selon la revendication 3, dans lequel la structure de la ligne d'assemblage dans le graphe de connaissance fournit des informations telles que, mais non limitées à, l'interconnexion des composants de la ligne d'assemblage, la disponibilité des capteurs et de leurs interconnexions, et la commande d'un contrôleur logique programmable, PLC, dans la ligne d'assemblage.

5. Procédé selon l'une quelconque des revendications 1 à 4, dans lequel le système de surveillance (302) comprend un ou plusieurs outils de diagnostic tels que PRONETA, un ou plusieurs dispositifs de terrain intelligents tels qu'un maître IO-Link et un protocole standard d'échange de données tel qu'OPC-UA.

6. Procédé selon l'une quelconque des revendications 1 à 5, dans lequel la pluralité de dispositifs comprend au moins, mais sans s'y limiter, des capteurs, des actionneurs, des vannes et des modules d'entrée/sortie binaires.

7. Procédé selon l'une quelconque des revendications 1 à 6, dans lequel les règles de transformation (216) sont appliquées aux données extraites en étendant l'ontologie pour un ou plusieurs dispositifs de terrain intelligents.

8. Procédé selon l'une quelconque des revendications 1 à 7, dans lequel la sortie dépend du résultat de la comparaison et est fournie par un système de décision autonome (218), qui est une interface de programmation d'application.

9. Procédé selon l'une quelconque des revendications 1 à 8, comprenant en outre d'utiliser une ou plusieurs bases de données de séries chronologiques pour stocker les données extraites du système de surveillance dans le cas où les données extraites sont en grande quantité.

10. Procédé selon l'une quelconque des revendications 1 à 9, comprenant en outre la mise en œuvre d'analyses des performances pour la ligne d'assemblage en comparant des données en temps réel extraites du système de surveillance à des données périodiques passées pour la même ligne d'assemblage.

11. Système informatique (200) pour contrôler des lignes d'assemblage parallèles, le système (200) comprenant :
- une ou plusieurs unités de traitement (202) ;
- une unité de mémoire (204) couplée aux une ou plusieurs unités de traitement (202), où l'unité de mémoire (204) comprend des instructions qui, lorsqu'elles sont exécutées par les un ou plusieurs processeurs, configurent les un ou plusieurs processeurs (202) pour exécuter les étapes du procédé selon l'une quelconque des revendications 1 à 10.

12. Produit programme informatique, comprenant des instructions lisibles par machine y étant stockées qui, lorsqu'elles sont exécutées par une ou plusieurs unités de traitement (202), amènent les une ou plusieurs unités de traitement (202) à exécuter les étapes de procédé selon l'une quelconque des revendications 1 à 10.
